# EUROPÄISCHE PATENTSCHRIFT

(11) **EP 0 668 810 B1**
(45) Veröffentlichungstag und Bekanntmachung des Hinweises auf die Patenterteilung: **01.12.1999**
(21) Anmeldenummer: 94925326.4
(22) Anmeldetag: 13.09.1994
(51) Int. Cl.: B23Q 1/00, B23B 31/00, B23B 31/20

(54) **SPANNVORRICHTUNG FÜR WERKZEUGMASCHINEN**
CLAMPING DEVICE FOR MACHINE TOOLS
DISPOSITIF DE SERRAGE POUR MACHINES-OUTILS

(30) Priorität: 14.09.1993 CH 275793
(43) Veröffentlichungstag der Anmeldung: 30.08.1995
(73) Patentinhaber: REGOFIX AG, CH-4418 Reigoldswil (CH)
(72) Erfinder: GERBER, Ernst, CH-4418 Reigoldswil (CH)
(74) Vertreter: Braun, André, jr.
(86) Internationale Anmeldenummer: CH9400180
(87) Internationale Veröffentlichungsnummer: WO9507791

(56) Entgegenhaltungen:
- CH-A- 678 290
- DE-A- 3 600 445
- DE-A- 3 603 301
- DE-B- 2 139 437

## Beschreibung

Die Erfindung betrifft eine Spannvorrichtung zwischen einem Werkzeugschaft und einer Werkzeugmaschine. Insbesondere betrifft die Erfindung eine Spannvorrichtung für Schneidwerkzeuge mit interner Kühlmittelzufuhr.

Zur spanabhebenden Bearbeitung von hauptsächlich Metallen werden auf Werkzeugmaschinen (Bohr-, Fräs-, Drehmaschinen) u.a. Schneidwerkzeuge eingesetzt, welche durch eine Bohrung im Werkzeugschaft das Kühlmittel direkt an die Schneide zuführen, um dem Werkzeug eine höhere Standzeit und bessere Schnittleistung zu verleihen.

Solche Schneidwerkzeuge haben meist einen runden Schaft, welcher mittels einer geeigneten Spannzange resp. Spannhülse, die zwecks Flexibilität Schlitze aufweist, im Werkzeughalter festgeklemmt und so gegen ein Verdrehen gesichert ist. Da diese Schneidwerkzeuge mit interner Kühlmittelzufuhr Drehzahlen von ohne weiteres 40 000 U/min ausgesetzt sind, wird eine verstärkte Kühlung des Arbeitsvorgangs unabdingbar. Zur Verbesserung der Kühlung wird deshalb der Druck, mit dem das Kühlmittel eingespritzt wird, auf bis zu 50 bar oder mehr erhöht. Wenn nun ein Werkzeug mit interner Kühlmittelzufuhr mittels Spannzange resp. Spannhülse mit der Werkzeugmaschine verbunden wird, geht ein grosser Teil der Kühlflüssigkeit durch die Schlitze der nicht abgedichteten Spannzange resp. Spannhülse verloren.

Um dies zu verhindern, hat man bisher die Spannzangen-resp. Spannhülsenschlitze zumindest teilweise mit einer als Absperrorgane dienenden elastischen Masse, wie z.B. Gummi, ausgefüllt, wobei dann allerdings der Spannbereich verloren ging (CH 678 290), oder man hat die Spannmutter mittels einer Dichtscheibe, eines festen Dichtrings oder mittels einer Manschette abgedichtet, oder man hat in eigens angebrachten Bohrungen in den Schlitzen der Spannzange resp. Spannhülse Gummizapfen eingesetzt. Nachteilig bei diesen Varianten ist, dass für jeden Wellen- resp. Werkzeugschaftdurchmesser eine Dichtscheibe mit entsprechendem Durchmesser oder eine Manschette vorhanden sein muss und dass die Dichtringe resp. Gummizapfen bei den heutigen hohen Drücken der Kühlflüssigkeiten nicht mehr sicher abdichten und durch die verschiedenen Kühlmittel angegriffen werden. Der grösste Nachteil dieser Varianten besteht jedoch darin, dass eine abzudichtende Spannzange resp. Spannhülse zusätzliche Bauteile benötigte.

Der Erfindung liegt deshalb die Aufgabe zugrunde, eine gegen Austreten von Flüssigkeiten aus Werkzeugmaschinen auch bei hohen Drücken von bis zu 150 atü einwandfrei abdichtende und ihre Flexibilität weitgehend erhaltende Spannvorichtung zu schaffen, die sich in radialer und axialer Richtung erstreckende Schlitze aufweist und ohne zusätzliche dichtende Bauteile auskommt und trotzdem in herkömmlichen Werkzeugmaschinen eingesetzt werden kann.

Ausgehend von einer Vorrichtung der eingangs beschriebenen Art sind zur Lösung der vorstehenden Aufgabe Spannzangen resp. Spannhülsen vorgesehen, deren kennzeichnende Merkmale in den Patentansprüchen 1 und 2 definiert sind.

Durch radialen Druck auf die Aussenkontur der Spannzange resp. Spannhülse oder durch axialen Druck mittels Spannmutter bei einer konischen Spannzange erhält man kühlmitteldichte Metall-Metall Dichtungen zwischen Werkzeugschaft, Spannzange resp. Spannhülse und Spannzangen- resp. Spannhülsenaufnahme, so dass das unter Druck stehende Kühlmittel nur noch über die bestimmungsgemäss im Werkzeugschaft vorgesehene Bohrung Richtung Werkzeug entweichen kann.

Alternativ kann man die Ausbildung von maschinenseitig offenen Schlitzen vermeiden, indem man in Umfangsrichtung abwechselnd werkzeugseitig offene und beidseitig geschlossene Zwischenschlitze, d.h. Schlitze, die an beiden Enden nicht durchgefräste Positionen aufweisen, verwendet. Auch bei dieser Ausbildung der Erfindung kann das Kühlmittel nur noch über die bestimmungsgemäss im Werkzeugschaft vorgesehene Bohrung Richtung Schneidwerkzeug entweichen.

Es werden entweder doppelt geschlitzte Spannzangen resp. Spannhülsen verwendet, die sich dadurch auszeichnen, dass die Schlitze abwechselnd von den entgegengesetzen Seiten in die Spannzangen eingefräst werden, oder Spannhülsen mit Zwischenschlitzen, d.h. mit Schlitzen, die an beiden Enden nicht durchgefräste Positionen aufweisen und die deshalb an beiden Enden der Spannhülse geschlossen sind. Eine solche Spannhülse hat dann nur noch schneidwerkzeugseitig offene Schlitze, so dass auf der Maschinenseite wegen des Fehlens von offenen Schlitzen keine Dichtigkeitsprobleme mehr bestehen. Um die Flexibilität auch solcher. Spannhülsen zu verbessern, können sie vorteilshalber zusätzlich eine Entleerung aufweisen.

Die Spannzangen resp. Spannhülsen sind üblicherweise aus gehärtetem Federstahl, Werkzeugstahl oder Beryllium-Bronze gefertigt, so dass ihnen die radial eingefrästen Schlitze bei mechanischer oder hydraulischer Druckanwendung eine gewisse Flexibilität verleihen. Sie können sowohl zylindrisch als auch konisch, doppelkonisch oder kombiniert konisch/ zylindrisch geformt sein.

Die Spannzangen resp. Spannhülsen können am maschinenseitigen Ende eine Aufbohrung aufweisen, wenn der Werkzeugschaft einen geringen Durchmesser aufweist, während bei Werkzeugschäften grösseren Durchmessers dies üblicherweise nicht nötig ist.

Ausführungsbeispiele werden an Hand der Figuren näher erläutert. Es zeigen
Fig.1 einen Schnitt durch eine Spannvorrichtung mit konischer Spannzange ohne Aufbohrung;
Fig.2 einen Schnitt durch eine Spannvorrichtung mit konischer Spannzange und mit Aufbohrung;
Fig.3 einen Schnitt durch eine Spannvorrichtung mit zylindrischer Spannhülse mit hydraulischer Spannung;
Fig.4a eine perspektivische Seitensicht einer zylindrischen Spannhülse;
Fig.4b eine perspektivische Sicht von vorne der zylindrischen Spannhülse von Fig.4a;
Fig.5a eine perspektivische Seitensicht einer konischen Spannzange;
Fig.5b eine perspektivische Sicht von vorne der konischen Spannzange von Fig.5a.

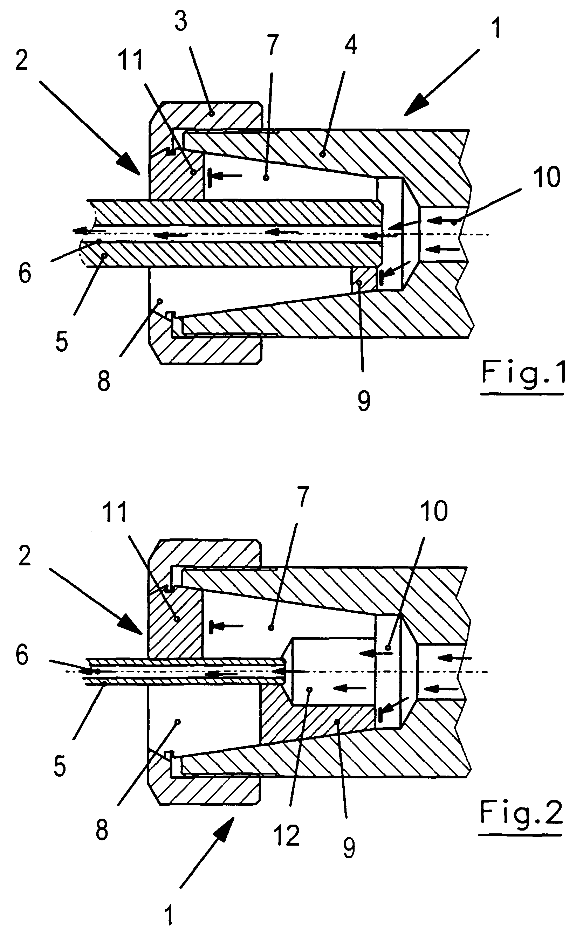

In Fig.1 wird eine Spannvorrichtung (1) gezeigt, die eine konische Spannzange (2) aufweist. Die Spannzange (2) wird mittels der Spannmutter (3) in der Spannzangenaufnahme (4) fixiert. Beim Fixieren der Spannmutter (3) wird diese vermehrt in die konisch verlaufende Spannzangenaufnahme (4) gepresst, was einen axialen Druck auf den Werkzeugschaft (5) ausübt, so dass dieser seinerseits fest in der Spannzangenaufnahme (4) fixiert wird. Der Werkzeugschaft (5) weist für die innere Kühlmittelzufuhr eine Bohrung (6) auf. Die funktionsgemäss benötigte Flexibilität der Spannzange (2) wird durch radial verlaufende Schlitze (7,8) in der Spannzange (2) erreicht. Ein Teil der Schlitze (7) ist maschinenseitig und ein anderer Teil der Schlitze (8) ist schneidwerkzeugseitig in die Spannzange (3) eingefräst. Diese Schlitze werden vorzugsweise so angefertigt, dass eine bestmögliche Flexibilität erreicht und die grösstmögliche Klemmkraft auf den Werkzeugschaft (5) übertragen werden kann. Die maschinenseitig in die Spannzange (2) eingefrästen Schlitze (7) weisen eine bestimmte Länge auf. Diese bestimmt sich nach der Länge der Spannzangenaufnahme (4), wobei die nicht durchgefrästen Positionen (11) zusammen mit dem Werkzeugschaft (5) und der Spannzangenaufnahme (4) als Sperre für das Austreten des Kühlmittels (10) aus der Spannvorrichtung (1) wirken. Da auch die werkzeugseitig eingefrästen Schlitze (8) in der Spannzange (2) nicht durchgefräste Positionen (9) aufweisen, die gegen das Kühlmittel (10) eine analoge Sperre bilden, kann das Kühlmittel nur noch durch die Bohrung (3) an seinen Bestimmungsort zum Schneidwerkzeug entweichen. Durch die Anordnung und Länge der Schlitze (7,8) wird das Schlitzlabyrinth so verriegelt, dass kein freier und zusammenhängender Ausgang für das Kühlmittel (10) mehr vorhanden ist, welcher das ungehinderte Austreten des Kühlmittels (10) durch die Schlitze (7,8) ermöglichten würde.

Will man die Flexibilität der Spannzange (2) erhöhen, dann wird man die Schlitze (7,8) länger ausgestalten resp. die nicht durchgefrästen Positionen (9,11) kürzer halten als wenn die Flexibilität der Spannzange (2) von geringerer Bedeutung ist.

Fig.2 zeigt eine ähnliche Spannvorrichtung wie sie in Fig.1 gezeigt wurde. Der wesentliche Unterschied besteht in der zusätzlichen Anordnung einer Aufbohrung (12), die insbesondere bei Spannzangen, die sich für Werkzeugschäfte (5) mit geringem Durchmesser eignen, verwendet wird. Zudem wird solchenfalls die nicht durchgefräste Position (9) stark vergrössert, damit diese Position zwecks Vermeidung des Austretens des Kühlmittels am Werkzeugschaft abdichtend fixiert werden kann.

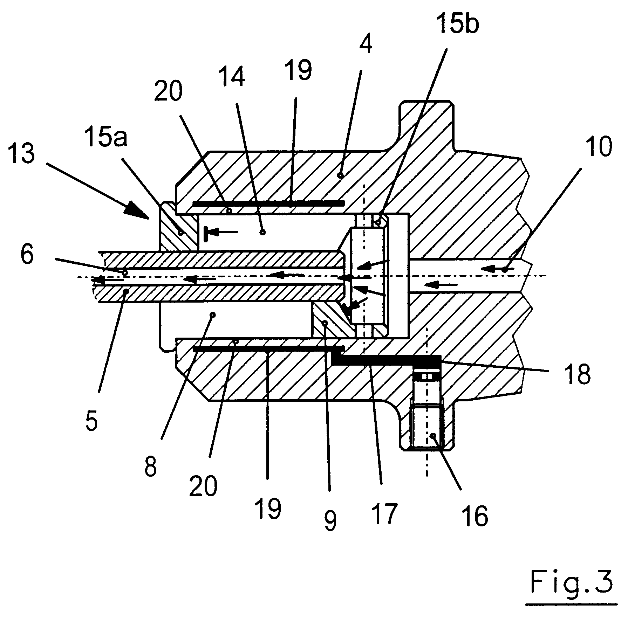

In Fig.3 wird eine Spannhülse (13) gezeigt, die hydraulisch gespannt wird. Die Spannhülse (13) weist einerseits schneidwerkzeugseitig eingefräste Schlitze (8) und andererseits Zwischenschlitze (14) auf, die an beiden Enden je eine nicht durchgefräste Position (15a) und (15b) aufweisen. Beim Hineindrehen der Schraube (16) wird das Hydrauliköl (17) aus dem Vorratsbehälter (18) in den zylinderförmigen Hohlraum (19) in der Spannhülsenaufnahme (4) gepresst, so dass die dünnen Wände (20) zwischen Hohlraum (19) und Spannhülse (13) elastisch nach innen gedrückt werden, und dadurch die Spannhülse (13) in der Spannhülsenaufnahme (4) fixiert wird.

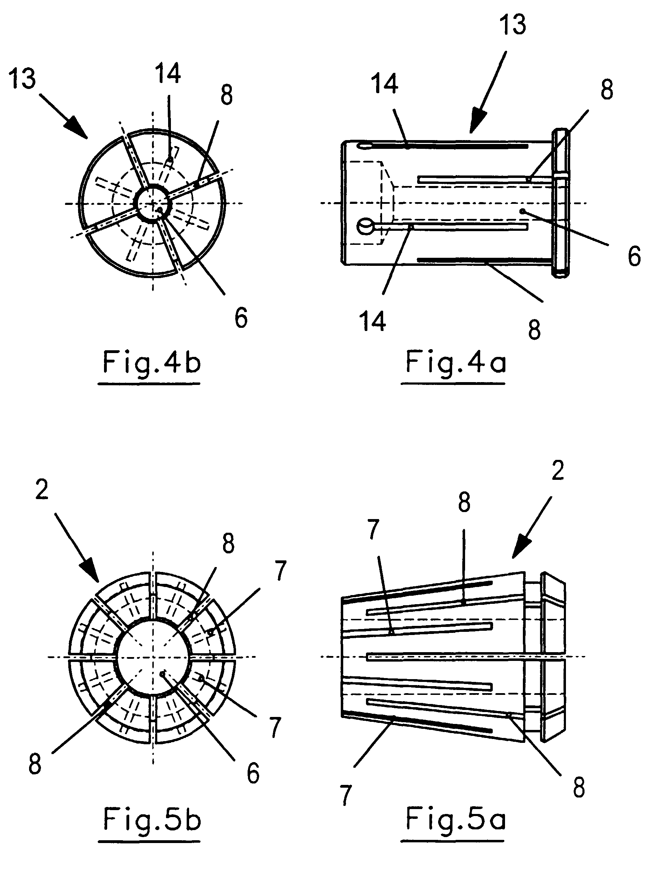

Die Bedeutung der in den Fig.4a und 4b gezeigten zylindrischen Spannhülse (13) und der in den Fig.5a und 5b gezeigten konischen Spannzange (2) kann aus den vorhergehenden Fig. ohne weiteres abgelesen werden und braucht deshalb nicht näher erläutert zu werden.

## Patentansprüche

1. Spannvorrichtung (1) zwischen einem Werkzeugschaft und einer Werkzeugmaschine, insbesondere einem Schneidwerkzeug mit interner Kühlmittelzufuhr, enthaltend eine Spannzange (2) und eine Spannzangenaufnahme (4), oder eine Spannhülse (13) und eine Spannhülsenaufnahme (4), wobei die Spannzange (2) oder die Spannhülse (13) kühlmitteldicht verschlossen ist und sich in radialer und axialer Richtung erstreckende Schlitze (7, 8) aufweist, dadurch gekennzeichnet, dass die Schlitze (7, 8) in Umfangsrichtung abwechselnd werkzeugseitig und maschinenseitig offen sind, wobei die nicht durchgefrästen Positionen (9, 11) der Schlitze (7, 8) am Werkzeugschaft und mindestens teilweise an der Spannzangen- oder Spannhülsenaufnahme (4) derart fixiert sind, dass sie zusammen mit dem Werkzeugschaft und der Spannzangen- oder Spannhülsenaufnahme (4) die Kühlmittelsperre bilden.

2. Spannvorrichtung (1) zwischen einem Werkzeugschaft und einer Werkzeugmaschine, insbesondere einem Schneidwerkzeug mit interner Kühlmittelzufuhr, enthaltend eine Spannhülse (13) und eine Spannhülsenaufnahme (4), wobei die Spannhülse (13) kühlmitteldicht verschlossen ist und sich in radialer und axialer Richtung erstreckende Schlitze (8, 14) aufweist, dadurch gekennzeichnet, dass die Schlitze (8, 14) in Umfangsrichtung abwechselnd werkzeugseitig offen und als Zwischenschlitze mit an beiden Enden je einer nicht durchgefrästen Position (15a, 15b) ausgebildet sind, wobei die nicht durchgefrästen Positionen (9, 15a, 15b) der Schlitze (8, 14) am Werkzeugschaft und mindestens teilweise an der Spannhülsenaufnahme (4) derart fixiert sind, dass sie zusammen mit dem Werkzeugschaft und der Spannhülsenaufnahme (4) die Kühlmittelsperre bilden.

3. Spannvorrichtung nach einem der Patentansprüche 1 oder 2, dadurch gekennzeichnet, dass die Spannzange (2) oder Spannhülse (13) aus gehärtetem Federstahl, Werkzeugstahl oder Beryllium-Bronze gefertigt sind.

4. Spannvorrichtung nach einem der Patentansprüche 1-3, dadurch gekennzeichnet, dass die Spannzange (2) oder Spannhülse (13) eine Aufbohrung (12) aufweisen.

5. Spannvorrichtung nach einem der Patentansprüche 1-4, dadurch gekennzeichnet, dass die Spannzange (2) oder Spannhülse (13) mechanisch oder hydraulisch fixiert sind.

## Claims

1. A clamping device (1) between a tool shank and a machine tool, more particularly a cutting tool which has an internal coolant supply, comprising a collet chuck (2) and a collet chuck holder (4), or a clamping sleeve (13) and a clamping sleeve holder (4), wherein the collet chuck (2) or the clamping sleeve (13) is closed coolant-tight and has slots (7, 8) extending in the radial and axial directions, characterised in that in the peripheral direction the slots (7, 8) are open alternately on the tool side and the machine side, the non milled-through items (9, 11) of the slots (7, 8) being so fixed on the tool shank and at least partially on the collet chuck holder or the clamping sleeve holder (4) that said items co-operate with the tool shank and the collet chuck holder or the clamping sleeve holder to form the coolant barrier.

2. A clamping device (1) between a tool shank and a machine tool, more particularly a cutting tool which has an internal coolant supply, comprising a clamping sleeve (13) and a clamping sleeve holder (4), wherein the clamping sleeve (13) is closed coolant-tight and has slots (8, 14) extending in the radial and axial directions, characterised in that in the peripheral direction the slots (8, 14) are constructed alternately open on the tool side and in the form of intermediate slots having an unmilled-through item (15a, 15b) at each end, the unmilled-through items (9, 15a, 15b) of the slots (8, 14) being so fixed on the tool shank and at least partially on the clamping sleeve holder (4) that said items co-operate with the tool shank and the clamping sleeve holder (4) to form the coolant barrier.

3. A clamping device according to one of Claims 1 or 2, characterised in that the collet chuck (2) or clamping sleeve (13) are made from hardened spring steel, tool steel or beryllium bronze.

4. A clamping device according to one of Claims 1-3, characterised in that the collet chuck (2) or clamping sleeve (13) has a widened bore (12).

5. A clamping device according to one of Claims 1-4, characterised in that the collet chuck (2) or clamping sleeve (13) is fixed mechanically or hydraulically.

## Revendications

1. Dispositif de serrage (1) entre une tige d'outil et une machine-outil, en particulier un outil de coupe avec arrivée interne de réfrigérant, contenant une pince de serrage (2) et un logement de pince (4), ou une douille de serrage (13) et un logement de douille de serrage (4), la pince de serrage (2) ou la douille de serrage (13) étant fermée de façon étanche au réfrigérant et des fentes (7, 8) s'étendant dans le sens radial et le sens axial, caractérisé en ce que les fentes (7, 8) sont ouvertes dans le sens périphérique alternativement côté outil et côté machine, les positions (9, 11) non fraisées des fentes (7, 8) étant fixées sur la tige d'outil et au moins partiellement sur le logement de pince de serrage ou le logement de doute de serrage (4) de telle façon qu'elles forment avec la tige d'outil et le logement de pince de serrage ou le logement de douille de serrage (4) le barrage pour le réfrigérant.

2. Dispositif de serrage (1) entre une tige d'outil et une machine-outil, en particulier un outil de coupe avec arrivée interne de réfrigérant, contenant une douille de serrage (13) et un logement de douille de serrage (4), la douille de serrage (13) étant fermée de façon étanche au réfrigérant et des fentes (8, 14) s'étendant dans le sens radial et le sens axial, caractérisé en ce que les fentes (8, 14) sont ouvertes dans le sens périphérique alternativement côté outil et sont réalisées sous la forme de fentes intermédiaires avec sur chacune des deux extrémités une position (15a, 15b) non fraisée, les positions (9, 15a, 15b) non fraisées des fentes (8, 14) étant fixées sur la tige d'outil et au moins partiellement sur le logement de douille de serrage (4) de telle façon qu'elles forment avec la tige d'outil et le logement de douille de serrage (4) le barrage pour le réfrigérant.

3. Dispositif de serrage selon l'une quelconque des revendications 1 ou 2, caractérisé en ce que la pince de serrage (2) ou la douille de serrage (13) est fabriquée en acier à ressorts durci, acier à outils ou bronze au béryllium.

4. Dispositif de serrage selon l'une quelconque des revendications 1 à 3, caractérisé en ce que la pince de serrage (2) ou la douille de serrage (13) présente un alésage (12).

5. Dispositif de serrage selon l'une quelconque des revendications 1 à 4, caractérisé en ce que la pince de serrage (2) ou la douille de serrage (13) est fixée de façon mécanique ou hydraulique.
